# EUROPÄISCHE PATENTSCHRIFT

(11) **EP 3 641 089 B1**
(45) Veröffentlichungstag und Bekanntmachung des Hinweises auf die Patenterteilung: **04.05.2022**
(21) Anmeldenummer: 18201283.1
(22) Anmeldetag: 18.10.2018
(51) Int. Cl.: H02J 3/38, H02J 13/00

(54) **VERFAHREN, SYSTEM UND STEUEREINHEIT ZUR VERTEILUNG ELEKTRISCHER ENERGIE**
METHOD, SYSTEM AND CONTROLLER FOR DISTRIBUTING ELECTRIC ENERGY
PROCÉDÉ, SYSTÈME ET DISPOSITIF POUR LA DISTRIBUTION D'ÉNERGIE ÉLECTRIQUE

(43) Veröffentlichungstag der Anmeldung: 22.04.2020
(73) Patentinhaber: eFriends Energy GmbH, 2023 Nappersdorf (AT)
(72) Erfinder: KATT, Matthias, 2002 Füllersdorf (AT); NIKODYM-HAUNOLD, Markus, 2136 Laa an der Thaya (AT); DIMMEL, Friedrich, 2020 Hollabrunn (AT); PFANNHAUSER, Günther, 2013 Göllersdorf (AT); DIMMEL, Klara, 2020 Hollabrunn (AT); BADER, Gerd, 2002 Füllersdorf (AT)
(74) Vertreter: Puchberger & Partner Patentanwälte

(56) Entgegenhaltungen:
- US-A1- 2017 331 292
- US-A1- 2018 097 366
- US-B2- 8 731 724

## Beschreibung

Die Erfindung betrifft ein Verfahren, ein System und eine Steuereinheit zur Verteilung der in einem Verbund elektrischer Anschlussstellen durch den Anschlussstellen zugeordnete Energieproduktionsanlagen generierten elektrischen Energie über ein elektrisches Energieverteilungsnetz gemäß den unabhängigen Patentansprüchen.

Aus dem Stand der Technik ist es bekannt, elektrischen Anschlussstellen, beispielsweise Haushalten oder Unternehmen, lokale Energieproduktionsanlagen zuzuordnen. Dabei kann es sich beispielsweise um Photovoltaikanlagen, Windenergieanlagen, Wasserkraftanlagen oder ähnliche Generatoren elektrischer Energie handeln. Die von den Energieproduktionsanlagen generierte elektrische Energie wird zur Deckung der an der Anschlussstelle lokal benötigten elektrischen Energie eingesetzt. Übersteigt der Energiebedarf an der Anschlussstelle die lokal produzierte Energiemenge, so wird Energie aus einem Energieverteilungsnetz bezogen. Wird an der Anschlussstelle mehr Energie produziert als benötigt, so wird der Energieüberschuss an das Energieverteilungsnetz geliefert.

Im Stand der Technik ist ein Verfahren und ein System zur Verteilung elektrischer Energie zwischen mehreren Haushalten beispielsweise aus der US 2017/331292 A1 bekannt.

Zunächst soll es aus Sicht des Betreibers der Anschlussstelle nach Möglichkeit vermieden werden, elektrische Energie aus dem Energieverteilungsnetz zu beziehen, da dies einerseits mit zusätzlichen Kosten verbunden ist, und andererseits dem Wunsch des Betreibers nach Nutzung möglichst lokal und ökologisch produzierter elektrischer Energie entgegenläuft. Für den Betreiber ist es jedoch in der Regel nicht möglich, seinen eigenen Energiebedarf stets mit der von seiner eigenen Energieproduktionsanlage zur Verfügung gestellten Energiemenge abzustimmen.

Andererseits ist auch die Lieferung lokal produzierter elektrischer Energie ins Energieverteilungsnetz für den Betreiber der Anschlussstelle nur eine Notlösung, da er dafür in der Regel nicht den gleichen Preis wie für die vom Energieverteilungsnetz zur Verfügung gestellte Energie erhält. Außerdem ist für den Betreiber der Anschlussstelle nicht ersichtlich, was mit seiner lokal produzierten elektrischen Energie in Folge geschieht, was wiederum dem Wunsch nach möglichst lokaler bzw. regionaler und ökologischer Wertschöpfung entgegenläuft.

Diese und andere Probleme werden durch ein Verfahren, ein System und eine Steuereinheit nach einem der unabhängigen Ansprüche gelöst.

Erfindungsgemäß ist ein Verfahren zur Verteilung der in einem Verbund elektrischer Anschlussstellen durch den Anschlussstellen zugeordnete Energieproduktionsanlagen generierten elektrischen Energie über ein Energieverteilungsnetz vorgesehen. Der Verbund kann dabei eine Vielzahl logisch verbundener elektrischer Anschlussstellen umfassen, die physisch mit demselben Energieverteilungsnetz in Verbindung stehen.

Erfindungsgemäß umfasst das Verfahren die folgenden Schritte:
In einem ersten Schritt, Berechnen der Energiebilanzen der Anschlussstellen durch mit intelligenten Zählern in Verbindung stehenden lokalen Steuereinheiten und Versenden der Energiebilanzen im Verbund.
In einem zweiten Schritt, Berechnen von Energieangeboten für jene Anschlussstellen mit negativer Energiebilanz (die Konsumenten) durch die Steuereinheiten jener Anschlussstellen mit positiver Energiebilanz (die Produzenten), wobei ein interner Regelkatalog berücksichtigt wird, und Versenden der berechneten Energieangebote an jene Anschlussstellen mit negativer Energiebilanz.
In einem dritten Schritt, Auswählen von Energieangeboten auf Grundlage eines internen Regelkatalogs durch die Steuereinheiten der Konsumenten, und Berechnen der benötigten Energiemenge und Versenden von Aufträgen an die ausgewählten Steuereinheiten der Produzenten.
In einem vierten Schritt, Bereitstellen von elektrischer Energie entsprechend der Aufträge durch die Produzenten an die Konsumenten über mit dem Energieverteilungsnetz verbundene elektrische Hausanschlüsse.

Das erfindungsgemäße Verfahren ermöglicht den Teilnehmern des Verbunds eine besonders effiziente Verteilung der lokal erzeugten elektrischen Energie. Der Verbund kann insbesondere eine Anzahl vertraglich verbundener Anschlussstellen umfassen, die mit einer zentralen Servereinheit in Verbindung stehen.

Erfindungsgemäß kann vorgesehen sein, dass jede Anschlussstelle bei der Ausführung des Verfahrens lediglich eine Untermenge des Verbunds, vorzugsweise eine, zwei, drei oder vier, logisch verbundene Anschlussstellen berücksichtigt. Es ist aber keine Beschränkung der Anzahl der logisch verbundenen Anschlussstellen vorgesehen. Dadurch wird ermöglicht, dass das Verfahren nicht im gesamten Verbund durchgeführt wird, sondern nur innerhalb eines Subnetzes des Verbunds, beispielsweise im Familien- und Bekanntenkreis.

Die Untermenge logisch verbundener Anschlussstellen kann in einer, durch die Steuereinheiten abfragbaren und benutzerdefinierbaren Liste auf einer zentralen Servereinheit abgelegt sein.

In der Liste kann auch für jede Steuereinheit eine Anzahl, nach geographischen Kriterien ausgewählter, insbesondere räumlich benachbarter oder getrennter, Steuereinheiten definiert sein. Die räumliche Nähe kann beispielsweise durch Abfrage von Adressdaten festgestellt werden. Umgekehrt kann erfindungsgemäß auch vorgesehen sein, dass räumlich fern gelegene Anschlussstellen logisch verbunden werden. Dies hat bei der Verwendung von Photovoltaikanlagen als Energieproduktionsanlagen den Vorteil, dass räumlich fern gelegene Anschlussstellen mit höherer Wahrscheinlichkeit unterschiedliche Energiebilanzen aufweisen.

Die Steuereinheiten jener Anschlussstellen mit positiver Energiebilanz berechnen im zweiten Schritt eine Verteilreserve, das ist jene zusätzliche Energiemenge, die sie unter Berücksichtigung ihrer Energieangebote und ihrer Energiebilanz noch verteilen könnten, und versenden diese gemeinsam mit den Energieangeboten an die Anschlussstellen mit negativer Energiebilanz.

Die Steuereinheiten jener Anschlussstellen mit negativer Energiebilanz können im dritten Schritt beim Auswählen der Energieangebote, Berechnen der benötigten Energiemenge und Versenden von Aufträgen an die ausgewählten Steuereinheiten jener Anschlussstellen mit positiver Energiebilanz eine an sie übermittelte Verteilreserve berücksichtigen.

Die Steuereinheiten jener Anschlussstellen mit negativer Energiebilanz können im dritten Schritt eine Nutzungsreserve, das ist jene zusätzliche Energiemenge, die sie unter Berücksichtigung ihrer Energiebilanz und der erhaltenen Energieangebote noch zusätzlich benötigen würden, berechnen und diese gemeinsam mit den ausgewählten Aufträgen an die Anschlussstellen mit positiver Energiebilanz versenden.

Die Anschlussstellen mit positiver Energiebilanz können beim Bereitstellen von elektrischer Energie im vierten Schritt die beauftragte Energiemenge mit der eigenen Energiebilanz vergleichen und im Fall eines Überschusses in einem zweiten Durchlauf zusätzliche Energie an jene Anschlussstellen übermitteln, die ihnen eine negative Nutzungsreserve übermittelt haben.

Die Steuereinheiten jener Anschlussstellen mit positiver Energiebilanz können überschüssige Energie ins Energieverteilungsnetz einspeisen. Die Steuereinheiten jener Anschlussstellen mit negativer Energiebilanz können benötigte Energie aus dem Energieverteilungsnetz beziehen.

Erfindungsgemäß kann insbesondere vorgesehen sein, dass das Berechnen der Energiebilanzen im ersten Schritt und das Bereitstellen von elektrischer Energie im vierten Schritt innerhalb eines vordefinierten Zeitraums von beispielsweise etwa 10 Sekunden erfolgt.

Die Erfindung umfasst ferner ein System mit einem Verbund elektrischer Anschlussstellen mit den Anschlussstellen zugeordneten Energieproduktionsanlagen, wobei an den Anschlussstellen mit intelligenten Zählern in Verbindung stehende lokale Steuereinheiten vorgesehen sind. Erfindungsgemäß sind die Steuereinheiten dazu ausgeführt, die Energiebilanzen der Anschlussstellen zu berechnen und im Verbund zu versenden.

Bei dem erfindungsgemäßen System sind die Steuereinheiten jener Anschlussstellen mit positiver Energiebilanz dazu ausgeführt, Energieangebote für jene Anschlussstellen mit negativer Energiebilanz zu berechnen, wobei die Steuereinheit zur Berücksichtigung eines internen Regelkatalogs eingerichtet ist, und die berechneten Energieangebote an jene Anschlussstellen mit negativer Energiebilanz zu versenden.

Bei dem erfindungsgemäßen System sind die Steuereinheiten jener Anschlussstellen mit negativer Energiebilanz dazu ausgeführt, Energieangebote auf Grundlage eines internen Regelkatalogs auszuwählen, die benötigte Energiemenge zu berechnen und Aufträge an die ausgewählten Steuereinheiten jener Anschlussstellen mit positiver Energiebilanz zu versenden.

Bei dem erfindungsgemäßen System sind die Anschlussstellen mit positiver Energiebilanz dazu ausgeführt, elektrische Energie entsprechend der ausgewählten Aufträge an jene Anschlussstellen mit negativer Energiebilanz über mit dem Energieverteilungsnetz verbundene elektrische Hausanschlüsse zur Verfügung zu stellen.

In dem erfindungsgemäßen System sind die Steuereinheiten jener Anschlussstellen mit positiver Energiebilanz dazu ausgeführt, eine Verteilreserve, das ist jene zusätzliche Energiemenge, die sie unter Berücksichtigung ihrer Energieangebote und ihrer Energiebilanz noch verteilen könnten, zu berechnen und diese gemeinsam mit den Energieangeboten an die Anschlussstellen mit negativer Energiebilanz zu versenden. Die Erfindung betrifft ferner ein computerlesbares Speichermedium, umfassend

Instruktionen zur Veranlassung eines erfindungsgemäßen Systems ,mit wenigstens einer erfindungsgemäßen Steuereinheit, zur Ausführung eines erfindungsgemäßen Verfahrens.

Die Erfindung betrifft ferner eine Steuereinheit umfassend eine Recheneinheit, eine Speichereinheit und eine Kommunikationseinheit, die mit einem intelligenten Zähler einer elektrischen Anschlussstelle mit zugeordneten Energieproduktionsanlagen verbindbar ist.

Erfindungsgemäß ist die Steuereinheit dazu ausgeführt, die Energiebilanz der Anschlussstelle zu berechnen und an zumindest eine andere Steuereinheit zu versenden, zumindest ein Energieangebot für zumindest eine andere Steuereinheit zu berechnen, wobei die Steuereinheit zur Berücksichtigung eines internen Regelkatalogs eingerichtet ist, und das Energieangebot an diese Steuereinheit zu versenden, Aufträge von zumindest einer anderen Steuereinheiten entgegenzunehmen, und elektrische Energie entsprechend der Aufträge über mit einem Energieverteilungsnetz verbundene elektrische Hausanschlüsse zur Verfügung zu stellen. Bei der erfindungsgemäßen Steuereinheit handelt es sich um eine Steuereinheit einer als Produzent elektrischer Energie im Verbund wirkenden Anschlussstelle. Die Steuereinheit ist ferner dazu ausgeführt, eine Verteilreserve, das ist jene zusätzliche Energiemenge, die eine Anschlussstelle unter Berücksichtigung ihrer Energieangebote und ihrer Energiebilanz noch verteilen könnte, zu berechnen und diese gemeinsam mit den Energieangeboten an die andere Steuereinheit zu versenden.

Erfindungsgemäß ist eine weitere Steuereinheit auch dazu ausgeführt, die Energiebilanz der Anschlussstelle zu berechnen und an zumindest eine andere Steuereinheit zu versenden, zumindest ein Energieangebot zumindest einer anderen Steuereinheit auszuwählen, wobei die Steuereinheit zur Berücksichtigung eines internen Regelkatalogs eingerichtet ist, die benötigte Energiemenge zu berechnen und zumindest einen Auftrag an die ausgewählte Steuereinheit zu versenden, und elektrische Energie entsprechend der Aufträge über mit einem Energieverteilungsnetz verbundene elektrische Hausanschlüsse entgegenzunehmen. Bei der erfindungsgemäßen Steuereinheit handelt es sich um eine Steuereinheit einer als Konsument elektrischer Energie im Verbund wirkenden Anschlussstelle. Die Steuereinheit ist ferner dazu ausgeführt eine Verteilreserve, das ist jene zusätzliche Energiemenge, die eine Anschlussstelle unter Berücksichtigung ihrer Energieangebote und ihrer Energiebilanz noch verteilen könnte, zu berücksichtigen.

Die Steuereinheit kann als Computer oder Mikrocontroller, insbesondere als Raspberry-Pi Computer, umfassend eine Recheneinheit, eine Speichereinheit und eine vorzugsweise drahtlose Schnittstelleneinheit, ausgeführt sein.

Die Steuereinheit kann auch im Standalone-Betrieb betrieben werden, wobei lediglich die ermittelte Energiebilanz an eine Anzeigeeinheit der Anschlussstelle gesendet wird.

Weitere erfindungsgemäße Merkmale ergeben sich aus den Patentansprüchen, den Figuren und der Beschreibung der Ausführungsbeispiele.

Die Erfindung wird nun an Hand nicht ausschließlicher Ausführungsbeispiele näher erläutert. Es zeigen:
Fig. 1 eine schematische Darstellung einer Ausführungsform eines erfindungsgemäßen Systems zur Durchführung einer Ausführungsform eines erfindungsgemäßen Verfahrens;
Fig. 2a - 2d schematische Darstellungen des Ablaufs einer Ausführungsform eines erfindungsgemäßen Verfahrens;
Fig.3 ein schematisches Flussdiagramm des Ablaufs einer Ausführungsform eines erfindungsgemäßen Verfahrens.

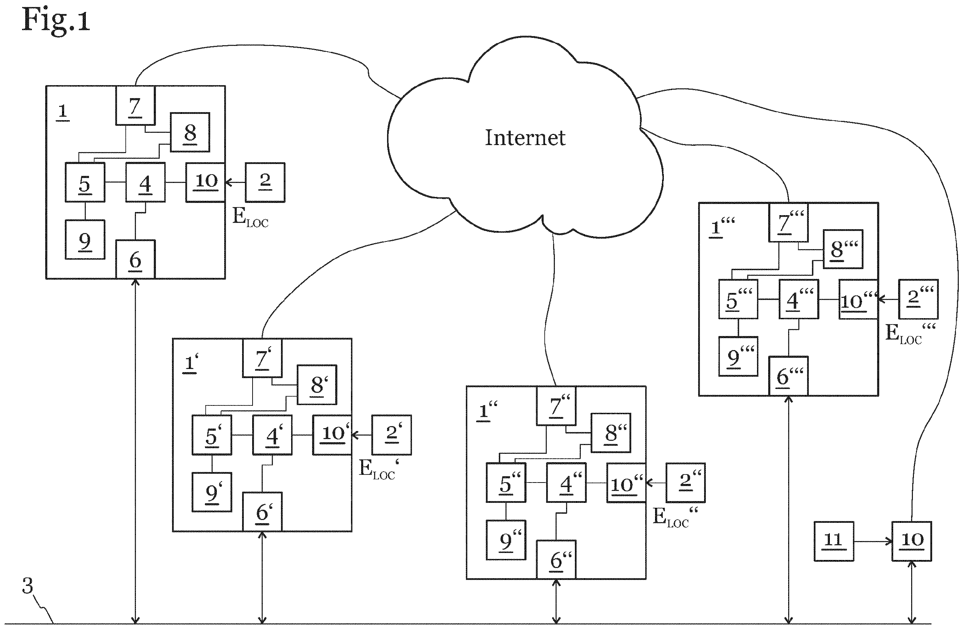

Fig. 1 zeigt eine schematische Darstellung einer Ausführungsform eines erfindungsgemäßen Systems zur Durchführung einer Ausführungsform eines erfindungsgemäßen Verfahrens. In diesem Ausführungsbeispiel sind vier logisch miteinander verbundene elektrische Anschlussstellen 1, 1', 1", 1‴ vorgesehen. Diese vier Anschlussstellen stellen eine Untermenge eines übergeordneten Verbunds elektrischer Anschlussstellen dar. Jeder Anschlussstelle ist eine elektrische Energieproduktionsanlage 2, 2', 2", 2'" zugeordnet, beispielsweise in Form einer lokalen Photovoltaikanlage. Die Energieproduktionsanlage liefert jeweils eine lokale elektrische Energie Eloc, Eloc', Eloc", Eloc‴ über einen elektrischen Wandler 10, 10', 10", 10"' oder direkt an die elektrische Anschlussstelle. Die Anschlussstellen sind ferner über einen elektrischen Hausanschluss 6, 6', 6", 6'" mit einem elektrischen Energieverteilungsnetz 3 verbunden.

In den elektrischen Anschlussstellen 1, 1', 1", 1‴ sind jeweils intelligente Zähler 4, 4', 4", 4'" angeordnet. Diese stehen in Verbindung mit dem elektrischen Hausanschluss 6, 6', 6", 6'" und dem elektrischen Wandler 10, 10', 10", 10"' bzw. direkt mit der lokalen Energieproduktionsanlage 2, 2', 2", 2"'. Die intelligenten Zähler 4, 4', 4", 4'" sind dazu ausgeführt, das Ausmaß an elektrischer Energie, das die Anschlussstelle vom Energieverteilungsnetz 3 bezieht, innerhalb eines gegebenen Zeitraums, beispielsweise 10 Sekunden, periodisch zu messen. Dabei handelt es sich in der Regel um den eigenen Energieverbrauch der Anschlussstelle abzüglich der lokal produzierten elektrischen Energie.

Ferner befinden sich in den elektrischen Anschlussstellen 1, 1', 1", 1‴ elektronische Steuereinheiten 5, 5', 5", 5"'. Diese sind mit den intelligenten Zählern 4, 4', 4", 4'" drahtlos verbunden, beispielsweise über eine Funkverbindung. Die elektronischen Steuereinheiten 5, 5', 5", 5'" stehen darüber hinaus mit lokalen Kommunikationseinheiten 7, 7', 7", 7"' der Anschlussstelle, beispielsweise in Form von kabellosen oder kabelgebundenen WLAN-Routern, in Verbindung. Über diese Kommunikationseinheiten stehen die Steuereinheiten mit dem Internet in Verbindung. Ferner stehen die Steuereinheiten mit grafischen Anzeigeeinheiten 8, 8', 8", 8'" in einer drahtlosen oder drahtgebundenen Verbindung. Die Anzeigeeinheiten sind dazu ausgeführt, den Energieverbrauch der Anschlussstelle, das Ausmaß der lokal produzierten Energie und gegebenenfalls die Energiebilanz der Anschlussstelle für den Benutzer darzustellen.

Die Steuereinheiten 5, 5', 5", 5'" umfassen eine Recheneinheit, eine Speichereinheit und eine Kommunikationseinheit. Es handelt sich in diesem Ausführungsbeispiel bei der Steuereinheit um einen Raspberry-Pi Computer. Den Steuereinheiten 5, 5', 5", 5'" ist jeweils ein interner Regelkatalog 9, 9', 9", 9'" zugeordnet. Der Regelkatalog ist in der Speichereinheit der Steuereinheit beispielsweise in Form einer Datenbank oder einer computerlesbaren Datei abgelegt.

Der interne Regelkatalog definiert Regeln zur Verteilung der generierten elektrischen Energie. Im vorliegenden Ausführungsbeispiel sind drei Regeln hinterlegt.

Gemäß einer ersten Regel werden alle Anschlussstellen gleich behandelt, das heißt eine Anschlussstelle mit einer positiven Energiebilanz bietet verfügbare Energie zu gleichen Teilen an die Anschlussstellen mit negativer Energiebilanz an. Gemäß einer zweiten Regel gibt der erzielbare Ertrag den Ausschlag, das heißt eine Anschlussstelle mit einer positiven Energiebilanz bietet verfügbare Energie an jene Anschlussstellen mit negativer Energiebilanz an, welche den höchsten Preis dafür zu zahlen bereit ist. Gemäß einer dritten Regel ist in der Steuereinheit der Anschlussstelle eine Prioritätenliste hinterlegt, die vom Benutzer definierbar ist, das heißt eine Anschlussstelle mit einer positiven Energiebilanz bietet verfügbare Energie an jene Anschlussstellen mit negativer Energiebilanz an, welche in der Prioritätenliste möglichst hoch gereiht sind.

Der interne Regelkatalog kann je nachdem, ob die Steuereinheit eine positive oder negative Energiebilanz hat, unterschiedlich sein.

In dieser Ausführungsform des erfindungsgemäßen Systems ist ferner eine zentrale Energieverteilungseinheit 10 vorgesehen, die mit einem Computernetzwerk wie beispielsweise dem Internet in Verbindung steht und dazu ausgeführt ist, elektrische Energie vom Energieverteilungsnetz 3 zu beziehen und elektrische Energie an das Energieverteilungsnetz zu liefern. Die Energieverteilungseinheit steht zu diesem Zweck in Verbindung mit externen Energieproduktionsmitteln 11, beispielsweise Produzenten ökologisch erzeugten elektrischen Stroms wie Windfarmen oder Wasserkraftanlagen. Die zentrale Energieverteilungseinheit dient als Quelle oder Senke zusätzlicher oder überschüssiger elektrischer Energie im Verbund.

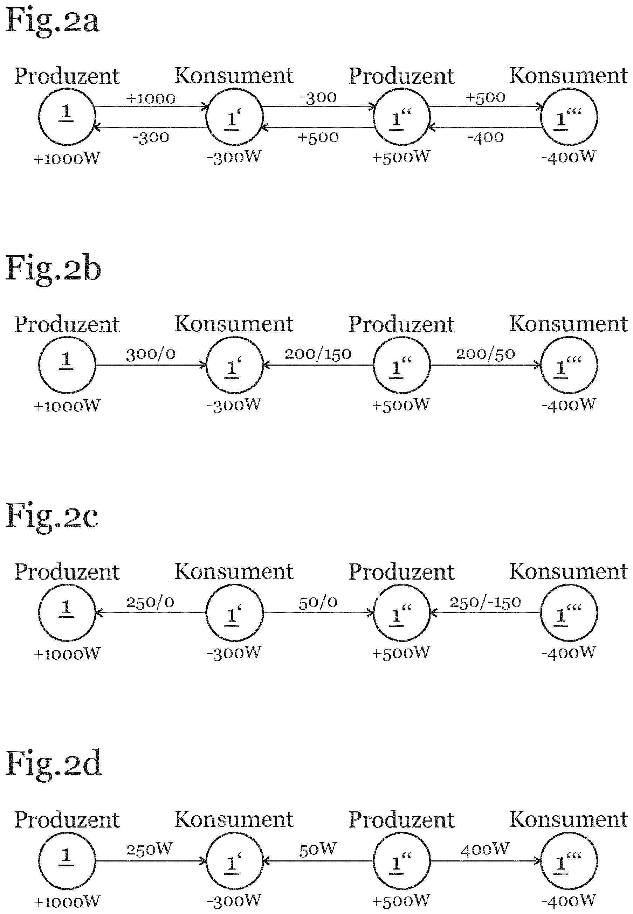

Fig. 2a zeigt eine schematische Darstellung des Ablaufs eines ersten Schritts einer Ausführungsform eines erfindungsgemäßen Verfahrens. In diesem Ausführungsbeispiel sind vier Anschlussstellen 1, 1', 1", 1'" vorgesehen, die einerseits über das Internet, und andererseits über ein Energieverteilungsnetz 3 miteinander verbunden sind. Diese Verbindungen sind aus Gründen der Übersichtlichkeit nicht dargestellt.

In diesem Ausführungsbeispiel werden bei der Ausführung des erfindungsgemäßen Verfahrens für jede Anschlussstelle stets nur eine Untermenge des Verbunds in Form von einer oder mehreren, gemäß einer auf einer nicht dargestellten Servereinheit hinterlegten Liste logisch verbundenen Anschlussstellen berücksichtigt. Im konkreten Beispiel bedeutet dies, dass die Anschlussstelle 1 zur Ausführung des Verfahrens nur die Anschlussstelle 1' berücksichtigt; die Anschlussstelle 1' berücksichtigt die Anschlussstellen 1 und 1", die Anschlussstelle 1" berücksichtigt die Anschlussstelle 1' und 1'", und die letzte Anschlussstelle 1‴ berücksichtigt die Anschlussstelle 1 ".

Die Definition der Untermenge des Verbunds, also im vorliegenden Ausführungsbeispiel die Information darüber, welche anderen Anschlussstellen eine Anschlussstelle berücksichtigt, wird von einer nicht dargestellten Servereinheit, die über das Internet mit den Steuereinheiten verbindbar ist, verwaltet. Die Servereinheit beinhaltet also eine benutzerdefinierbare Liste logisch verbundener Anschlussstellen. Dabei kann es sich insbesondere um räumlich benachbarte Anschlussstellen handeln. Es kann aber auch vorgesehen sein, dass die Benutzer die Anschlussstellen definieren, mit denen sie logisch verbunden sein wollen, und diese Information in der Liste auf der Servereinheit abgespeichert wird. Die jeweiligen Steuereinheiten fragen diese Liste an der Servereinheit ab, um jene Anschlussstellen zu ermitteln, mit denen sie logisch verbunden sind. Alternativ kann die Liste auch, zusätzlich zur Servereinheit, in den jeweiligen Steuereinheiten hinterlegt sein.

Im dargestellten ersten Schritt des Verfahrens bestimmen die Steuereinheiten der Anschlussstellen die Energiebilanzen der Anschlussstellen. Dabei wird die in den letzten 10 Sekunden verbrauchte elektrische Energie der im gleichen Zeitraum lokal produzierten elektrischen Energie gegenübergestellt und über die Zeitdauer gemittelt. Das Ergebnis ist ein durchschnittlicher Leistungswert, der im Fall eines Energieüberschusses positiv (Energieproduzent) und im Fall eines Energiemangels negativ (Energiekonsument) ist. Dieser durchschnittliche Leistungswert wird als Energiebilanz bezeichnet. Die Bestimmung der Energiebilanz erfolgt in der Regel durch Abfrage des zugeordneten intelligenten Zählers, da dieser direkt mit dem elektrischen Hausanschluss verbunden ist.

Die im Zusammenhang mit dem Begriff "Energie" verwendeten Begriffe beziehen sich stets auf eine durchschnittliche elektrische Leistung innerhalb einer vordefinierten Zeitdauer, beispielsweise 10 Sekunden.

Im konkreten Beispiel sind die Anschlussstellen 1,1" Produzenten elektrischer Energie, das heißt sie haben in den letzten 10 Sekunden mehr Energie lokal erzeugt als verbraucht. Die Anschlussstellen 1', 1'" sind Konsumenten elektrischer Energie, das heißt sie haben in den letzten 10 Sekunden mehr Energie verbraucht, als lokal erzeugt. Diese Werte, als auch die Anzahl und Identifikation der jeweils verbundenen ein oder mehreren Anschlussstellen werden in der Steuereinheit jeder Anschlussstelle abgelegt. Im nächsten Schritt erfolgt das Versenden der berechneten Energiebilanzen an die verbundenen Anschlussstellen.

Fig. 2b zeigt eine schematische Darstellung des Ablaufs eines zweiten Schritts der Ausführungsform des erfindungsgemäßen Verfahrens aus Fig. 2a. In diesem Schritt berechnen die Steuereinheiten der Produzenten Energieangebote für die Konsumenten und versenden die Energieangebote an die Konsumenten. Bei der Berechnung wird ein interner Regelkatalog 9 berücksichtigt. Der Regelkatalog ist als Datenbank oder computerlesbare Datei in der jeweiligen Steuereinheit abgelegt. Der Regelkatalog kann abhängig davon, ob die Steuereinheit als Produzent oder als Konsument arbeitet, unterschiedlich sein.

Im konkreten Ausführungsbeispiel ist als Regel eine solidarische Energieverteilung hinterlegt, bei der ein bestehender Energieüberschuss zu gleichen Teilen den verbundenen Anschlussstellen angeboten wird. Die Anschlussstelle 1 hat nur eine logisch verbundene Anschlussstelle und bietet dieser somit die gesamte nachgefragte Energiemenge von 300W an; die Anschlussstelle 1" hat zwei verbundene Anschlussstellen und bieten ihnen somit jeweils den halben Energieüberschuss 500W / 2 = 250 W an. Die angebotene Energiemenge ist nach oben durch die vom jeweiligen Konsumenten nachgefragte Energiemenge begrenzt.

Nicht nachgefragte Energiemengen werden wiederum zu gleichen Teilen an die verbleibenden verbundenen Anschlussstellen aufgeteilt, solange, bis entweder der gesamte Energieüberschuss aufgeteilt ist (Ansschlusstelle 1"), oder alle Nachfragen an Energie befriedigt wurden (Anschlussstelle 1).

Die Produzenten berechnen in diesem Ausführungsbeispiel zusätzlich eine Verteilreserve. Dies ist jene Energiemenge, die der Produzent, unter Berücksichtigung seiner Energieangebote, noch zusätzlich im letzten Schritt an verbundene Anschlussstellen verteilen könnte, sollten ein oder mehrere Konsumenten nicht die gesamte angebotene Energie abrufen. Die Verteilreserve wird neben den Energieangeboten an die Konsumenten übermittelt. Im konkreten Beispiel verfügt die Anschlussstelle 1 über eine Verteilreserve von 0 W, das heißt, es kann keine Energie mehr an andere verbundene Anschlussstellen verteilt werden.

Die Anschlussstelle 1" verfügt über eine Verteilreserve von 150W bzw. 50W für die jeweils verbundenen Konsumenten, das heißt es könnten noch 150W bzw. 50W an die Anschlussstellen umverteilt werden.

Fig. 2c zeigt eine schematische Darstellung des Ablaufs eines dritten Schritts der Ausführungsform des erfindungsgemäßen Verfahrens aus Fig. 2a und Fig. 2b. In diesem Schritt wählen die Konsumenten Energieangebote aus. Auch die Konsumenten, also die Anschlussstellen mit negativer Energiebilanz, wenden dabei einen in ihrer Steuereinheit 5', 5'" hinterlegten internen Regelkatalog 9 aus. Wiederum ist der Regelkatalog als Datenbank oder computerlesbare Datei in der jeweiligen Steuereinheit abgelegt. Im konkreten Ausführungsbeispiel ist als Regel eine solidarische Energieverteilung hinterlegt, wonach der Energiebedarf zu gleichen Teilen über die verbundenen Anschlussstellen, die Produzenten sind, gestillt werden soll. Alternativ kann eine Regel hinterlegt sein, wonach der Energiepreis den Ausschlag gibt, oder eine Regel, wonach eine Prioritätsliste berücksichtigt wird. In Folge berechnen die Konsumenten die benötigte Energiemenge und versenden Aufträge an die ausgewählten Produzenten.

Liegt bei einer Anschlussstelle ein Überangebot vor, wie im konkreten Beispiel bei der Anschlussstelle 1', die Angebote von 300W + 250W erhalten hat, jedoch nur 300W benötigen würden, so wird die von den Produzenten in Schritt 2 übermittelte Verteilreserve berücksichtigt. Das Überangebot am jeweiligen Konsumenten wird berechnet als Summer der Angebote abzüglich der Summe der übermittelten Verteilreserven. Ist das Überangebot negativ, herrscht nach Abzug der Verteilreserven kein Überangebot mehr und es werden die Angebote der Produzenten nach Höhe ihrer Verteilreserve gereiht und die entsprechenden Aufträge berechnet.

Ist das Überangebot unter Berücksichtigung der Verteilreserve wie im konkreten Beispiel positiv, wird entsprechend dem Überangebot unter Rücksichtnahme der Verteilreserve gemäß wirksamen Regeln der Auftrag an die verbundenen Produzenten gemindert.

Im konkreten Beispiel hat die Anschlussstelle 1' Angebote über 300W / 0W Verteilreserve von der Anschlussstelle 1, sowie 250W / 150W Verteilreserve von der Anschlussstelle 1". Das Überangebot unter Berücksichtigung der Verteilreserve an Anschlussstelle 1' ist somit 300W - 0W + 250W - 150W - 300W = 100W. Aufgrund der solidarischen Regel wird dieser Wert auf die Anzahl der verbundenen Produzenten aufgeteilt.

Es ergeben sich Aufträge von 300W - 50W = 250W an die Anschlussstelle 1 und 250W - 150W - 50W = 50W an die Anschlussstelle 1". Somit wird ein Auftrag über 250W an die Anschlussstelle 1" gesendet, und ein Auftrag über die verbleibend benötigten 50W an die Anschlussstelle 1 gesendet.

Ferner berechnen die Konsumenten in diesem Schritt eine Nutzungsreserve, also jene Energiemenge, die die jeweilige Anschlussstelle noch zur Deckung ihrer Energiebilanz benötigen würde, und senden diese gemeinsam mit den ausgewählten Aufträgen an die Produzenten. Im konkreten Beispiel hat die Anschlussstelle 1' ihren Bedarf gedeckt und somit keine Nutzungsreserve, während die Anschlussstelle 1'" einen ungedeckten Bedarf von 150W aufweist und diesen als Nutzungsreserve an ihre verbundene Anschlussstelle 1" übermittelt.

Fig. 2d zeigt eine schematische Darstellung des Ablaufs eines vierten Schritts der Ausführungsform des erfindungsgemäßen Verfahrens aus Fig. 2a - 2c. In diesem Schritt stellen die Anschlussstellen 1,1" mit positiver Energiebilanz an jene Anschlussstellen 1', 1‴ mit negativer Energiebilanz über das Energieverteilungsnetz 3 elektrische Energie zu Verfügung. Dabei überprüft jeder Produzent anhand der empfangenen Nutzungsreserven, ob er möglicherweise mehr als die tatsächlich beauftragte Menge an einen Konsumenten liefern kann. Im Fall der Anschlussstelle 1 ist dies nicht der Fall, da die einzig verbundene Anschlussstelle eine Nutzungsreserve von 0W gesendet hat. Somit liefert die Anschlussstelle 1 an die Anschlussstelle 1' eine Energiemenge von 250W. Die verbleibende Energiemenge an Anschlussstelle 1 von 750W wird ins Energieverteilungsnetz 3 eingespeist.

Hingegen hat die Anschlussstelle 1" bei Deckung der beiden Aufträge von 50W an die Anschlussstelle 1' und 250W an die Anschlussstelle 1'" überschüssige Energie, die zur Deckung der Nutzungsreserve von 150W von Anschlussstelle 1'" verwendet werden kann. Somit sendet die Anschlussstelle 1" an die Anschlussstelle 1‴ eine Energiemenge von 250W + 150W = 400W. Die verbleibende Energiemenge an Anschlussstelle 1" von 50W wird ins Energieverteilungsnetz 3 eingespeist.

Es wird also in diesem Ausführungsbeispiel nach dem Versenden der Aufträge in einem sogenannten "zweiten Durchlauf" eine Korrektur der Aufträge unter Berücksichtigung der Verteilreserve und der Nutzungsreserve durchgeführt, um möglichst sämtliche lokal erzeugte Energie in der Untermenge des Verbunds zu verteilen.

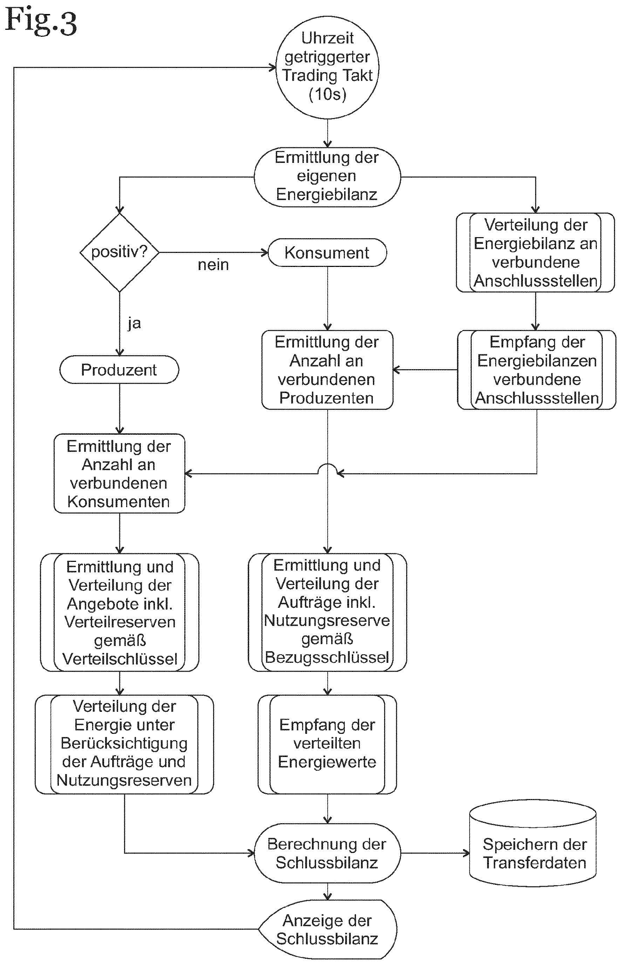

Fig. 3 zeigt ein schematisches Flussdiagramm des Ablaufs einer Ausführungsform eines erfindungsgemäßen Verfahrens. Das Verfahren wird in einem, durch die Uhrzeit getriggerten Trading-Takt von 10 Sekunden durchlaufen. Zunächst ermitteln die Steuereinheiten die Energiebilanzen der Anschlussstellen und Versenden die Energiebilanzen an die verbundenen Anschlussstellen.

Ist die Energiebilanz positiv, handelt es sich bei der Anschlussstelle um einen Produzenten; ist die Energiebilanz negativ, um einen Konsumenten. Die Konsumenten ermitteln danach die Anzahl und Identifikation der verbundenen Produzenten; die Produzenten ermitteln die Anzahl und Identifikation der verbundenen Konsumenten.

Im nächsten Schritt berechnen die Produzenten gemäß eines internen Regelkatalogs, der in diesem Ausführungsbeispiel als Verteilschlüssel bezeichnet wird, Energieangebote für die verbundenen Konsumenten, sowie ihre Verteilreserve. Diese Informationen werden an die verbundenen Konsumenten übermittelt.

Analog dazu berechnen die Konsumenten gemäß eines internen Regelkatalogs, der in diesem Ausführungsbeispiel als Bezugsschlüssel bezeichnet wird, Energieaufträge für die verbundenen Produzenten, sowie ihre Nutzungsreserve. Diese Informationen werden an die verbundenen Produzenten übermittelt. Der Regelkatalog der Produzenten unterscheidet sich in diesem Ausführungsbeispiel vom Regelkatalog der Konsumenten.

Im nächsten Schritt stellen die Produzenten elektrische Energie an die Konsumenten unter Berücksichtigung der Aufträge und Nutzungsreserven bereit. Die Konsumenten empfangen die verteilte Energie und berechnen ihre Schlussbilanz. Die Transferdaten, also insbesondere die verteilte Energiemenge, Zeitpunkt und Transaktionspartner, werden in den jeweiligen Steuereinheiten und gegebenenfalls auch in einer zentralen Servereinheit abgespeichert. Schließlich wird die Schlussbilanz auf den zugeordneten Anzeigeeinheiten angezeigt.

Die Erfindung beschränkt sich nicht auf die beschriebenen Ausführungsbeispiele sondern umfasst sämtliche Systeme, Verfahren und Steuereinheiten im Rahmen der nachfolgenden Patentansprüche.

### Bezugszeichenliste

- 1, 1', 1", 1‴: Elektrische Anschlussstelle
- 2, 2', 2", 2‴: Energieproduktionsanlage
- 3: Energieverteilungsnetz
- 4,4',4",4'": Intelligenter Zähler
- 5, 5', 5", 5"': Steuereinheit
- 6, 6', 6", 6"': Elektrischer Hausanschluss
- 7, 7', 7", 7"': Kommunikationseinheit
- 8, 8', 8", 8"': Anzeigeeinheit
- 9, 9', 9", 9"': Interner Regelkatalog
- 10: Energieverteilungseinheit
- 11: Energieproduktionsmittel

## Patentansprüche

1. Verfahren zur Verteilung der in einem Verbund elektrischer Anschlussstellen (1, 1', 1", 1‴) durch den Anschlussstellen zugeordnete Energieproduktionsanlagen (2, 2', 2", 2"') generierten elektrischen Energie über ein Energieverteilungsnetz (3), wobei das Verfahren die folgenden Schritte umfasst:
a. Berechnen, durch mit intelligenten Zählern (4, 4', 4", 4'") in Verbindung stehende lokale Steuereinheiten (5, 5', 5", 5'"), der Energiebilanzen der Anschlussstellen und Versenden der Energiebilanzen im Verbund,
b. Berechnen, durch die Steuereinheiten (5, 5') jener Anschlussstellen (1, 1") mit positiver Energiebilanz, von Energieangeboten für jene Anschlussstellen (1', 1‴) mit negativer Energiebilanz, wobei ein interner Regelkatalog (9, 9') berücksichtigt wird, und Versenden der berechneten Energieangebote an jene Anschlussstellen (1', 1‴) mit negativer Energiebilanz,
c. Auswählen, durch die Steuereinheiten jener Anschlussstellen (1', 1"') mit negativer Energiebilanz, von Energieangeboten auf Grundlage eines internen Regelkatalogs (9', 9"'), Berechnen der benötigten Energiemenge und Versenden von Aufträgen an die ausgewählten Steuereinheiten (5, 5") jener Anschlussstellen (1, 1") mit positiver Energiebilanz,
d. Bereitstellen von elektrischer Energie entsprechend der Aufträge durch jene Anschlussstellen (1, 1") mit positiver Energiebilanz an jene Anschlussstellen (1', 1"') mit negativer Energiebilanz über mit dem Energieverteilungsnetz (3) verbundene elektrische Hausanschlüsse (6, 6', 6", 6‴)
**dadurch gekennzeichnet, dass** die Steuereinheiten (5, 5") jener Anschlussstellen (1, 1") mit positiver Energiebilanz im Schritt b) eine Verteilreserve, das ist jene zusätzliche Energiemenge, die sie unter Berücksichtigung ihrer Energieangebote und ihrer Energiebilanz noch verteilen könnten berechnen und diese gemeinsam mit den Energieangeboten an die Anschlussstellen (1', 1"') mit negativer Energiebilanz versenden.

2. Verfahren nach Anspruch 1, **dadurch gekennzeichnet, dass** jede Anschlussstelle (1, 1', 1", 1‴) bei der Ausführung des Verfahrens lediglich eine Untermenge des Verbunds, vorzugsweise eine, zwei, drei oder vier, logisch verbundene Anschlussstellen (1, 1', 1", 1‴) berücksichtigt.

3. Verfahren nach Anspruch 2, **dadurch gekennzeichnet, dass** die Untermenge des Verbunds in einer, durch die Steuereinheiten (5, 5', 5", 5"') abfragbaren und benutzerdefinierbaren Liste auf einer zentralen Servereinheit abgelegt ist.

4. Verfahren nach Anspruch 3, **dadurch gekennzeichnet, dass** in der Liste für jede Steuereinheit (5, 5', 5", 5"') eine Anzahl nach geographischen Kriterien ausgewählter, insbesondere räumlich benachbarter oder getrennter, Steuereinheiten definiert ist.

5. Verfahren nach einem der Ansprüche 1 bis 4, **dadurch gekennzeichnet, dass** die Steuereinheiten jener Anschlussstellen (1', 1‴) mit negativer Energiebilanz beim Auswählen der Energieangebote, Berechnen der benötigten Energiemenge und Versenden von Aufträgen an die ausgewählten Steuereinheiten (5, 5") jener Anschlussstellen (1, 1") mit positiver Energiebilanz eine an sie übermittelte Verteilreserve berücksichtigen.

6. Verfahren nach einem der Ansprüche 1 bis 5, **dadurch gekennzeichnet, dass** die Steuereinheiten (5', 5"') jener Anschlussstellen (1', 1‴) mit negativer Energiebilanz im Schritt c) eine Nutzungsreserve, das ist jene zusätzliche Energiemenge, die sie unter Berücksichtigung ihrer Energiebilanz und der erhaltenen Energieangebote noch zusätzlich benötigen würde, berechnen und diese gemeinsam mit den ausgewählten Aufträgen an die Anschlussstellen (1, 1") mit positiver Energiebilanz versenden.

7. Verfahren nach Anspruch 6, **dadurch gekennzeichnet, dass** die Anschlussstellen (1, 1") mit positiver Energiebilanz beim Bereitstellen von elektrischer Energie im Schritt d) die beauftragte Energiemenge mit der eigenen Energiebilanz vergleichen und im Fall eines Überschusses in einem zweiten Durchlauf zusätzliche Energie an jene Anschlussstellen (1', 1‴) übermitteln, die ihnen eine negative Nutzungsreserve übermittelt haben.

8. Verfahren nach einem der Ansprüche 1 bis 7, **dadurch gekennzeichnet dass** die Steuereinheiten (5, 5") jener Anschlussstellen (1, 1") mit positiver Energiebilanz überschüssige Energie ins Energieverteilungsnetz (3) einspeisen, und die Steuereinheiten (5', 5"') jener Anschlussstellen (1', 1‴) mit negativer Energiebilanz benötigte Energie aus dem Energieverteilungsnetz (3) beziehen.

9. Verfahren nach einem der Ansprüche 1 bis 8, **dadurch gekennzeichnet, dass** das Berechnen der Energiebilanzen in Schritt a) und das Bereitstellen von elektrischer Energie in Schritt d) innerhalb eines vordefinierten Zeitraums von beispielsweise etwa 10 Sekunden erfolgt.

10. System umfassend einen Verbund elektrischer Anschlussstellen (1, 1', 1", 1‴) mit den Anschlussstellen zugeordneten Energieproduktionsanlagen (2, 2', 2", 2"') und lokale Steuereinheiten (5, 5', 5", 5‴), wobei die lokalen Steuereinheiten (5, 5', 5", 5‴) an den Anschlussstellen (1, 1', 1", 1‴) vorgesehen sind und mit intelligenten Zählern (4, 4', 4", 4‴) in Verbindung stehen, wobei
a. die Steuereinheiten dazu ausgeführt sind die Energiebilanzen der Anschlussstellen zu berechnen und im Verbund zu versenden,
b. die Steuereinheiten (5, 5") jener Anschlussstellen (1, 1") mit positiver Energiebilanz dazu ausgeführt sind, Energieangebote für jene Anschlussstellen (1', 1‴) mit negativer Energiebilanz zu berechnen, wobei die Steuereinheiten zur Berücksichtigung eines internen Regelkatalogs (9, 9") eingerichtet sind, und wobei die Steuereinheiten (5, 5") jener Anschlussstellen (1, 1") mit positiver Energiebilanz dazu ausgeführt sind, die berechneten Energieangebote an jene Anschlussstellen (1', 1‴) mit negativer Energiebilanz zu versenden,
c. die Steuereinheiten (5', 5"') jener Anschlussstellen (1', 1‴) mit negativer Energiebilanz dazu ausgeführt sind, Energieangebote auf Grundlage eines internen Regelkatalogs (9', 9‴) auszuwählen, die benötigte Energiemenge zu berechnen und Aufträge an die ausgewählten Steuereinheiten (5, 5") jener Anschlussstellen (1, 1") mit positiver Energiebilanz zu versenden,
d. die Anschlussstellen (1, 1") mit positiver Energiebilanz dazu ausgeführt sind, elektrische Energie entsprechend der ausgewählten Aufträge an jene Anschlussstellen (1', 1‴) mit negativer Energiebilanz über mit dem Energieverteilungsnetz (3) verbundene elektrische Hausanschlüsse (6, 6', 6", 6‴) zur Verfügung zu stellen **dadurch gekennzeichnet, dass** die Steuereinheiten (5, 5") jener Anschlussstellen (1, 1") mit positiver Energiebilanz dazu ausgeführt sind, eine Verteilreserve, das ist jene zusätzliche Energiemenge, die sie unter Berücksichtigung ihrer Energieangebote und ihrer Energiebilanz noch verteilen könnten, zu berechnen und diese gemeinsam mit den Energieangeboten an die Anschlussstellen (1', 1‴) mit negativer Energiebilanz zu versenden.

11. Computerlesbares Speichermedium, umfassend Instruktionen zur Veranlassung eines Systems nach Anspruch 10 mit wenigstens einer Steuereinheit nach Anspruch 12 oder 13 zur Ausführung eines Verfahrens nach einem der Ansprüche 1 bis 9.

12. Steuereinheit (5, 5") umfassend eine Recheneinheit, eine Speichereinheit und eine Kommunikationseinheit, die mit einem intelligenten Zähler (4, 4") einer elektrischen Anschlussstelle (1, 1") mit zugeordneten Energieproduktionsanlagen (2, 2"), verbindbar ist, wobei die Steuereinheit dazu ausgeführt ist,
a. die Energiebilanz der Anschlussstelle zu berechnen und an zumindest eine andere Steuereinheit (5', 5"') zu versenden,
b. zumindest ein Energieangebot für zumindest eine andere Steuereinheit (5', 5‴) zu berechnen, wobei die Steuereinheit zur Berücksichtigung eines internen Regelkatalogs (9, 9") eingerichtet ist, und wobei die Steuereinheit (5, 5") dazu ausgeführt ist, das Energieangebot an diese andere Steuereinheit (5', 5"') zu versenden,
c. Aufträge von zumindest einer anderen Steuereinheiten (5', 5"') entgegenzunehmen und elektrische Energie entsprechend der Aufträge über mit einem Energieverteilungsnetz (3) verbundene elektrische Hausanschlüsse (6, 6', 6", 6‴) zur Verfügung zu stellen
**dadurch gekennzeichnet, dass** die Steuereinheit (5, 5") ferner dazu ausgeführt ist, eine Verteilreserve, das ist jene zusätzliche Energiemenge, die eine Anschlussstelle unter Berücksichtigung ihrer Energieangebote und ihrer Energiebilanz noch verteilen könnte, zu berechnen und diese gemeinsam mit den Energieangeboten an die andere Steuereinheit (5', 5‴) zu versenden.

13. Steuereinheit (5', 5‴), umfassend eine Recheneinheit, eine Speichereinheit und eine Kommunikationseinheit, die mit einem intelligenten Zähler (4', 4‴) einer elektrischen Anschlussstelle (1', 1‴) mit zugeordneten Energieproduktionsanlagen (2', 2‴), verbindbar ist, wobei die Steuereinheit dazu ausgeführt ist,
a. die Energiebilanz der Anschlussstelle zu berechnen und an zumindest eine andere Steuereinheit (5,5") zu versenden,
b. zumindest ein Energieangebot zumindest einer anderen Steuereinheit (5, 5") auszuwählen, wobei die Steuereinheit zur Berücksichtigung eines internen Regelkatalogs (9', 9‴) eingerichtet ist, wobei die Steuereinheit (5', 5‴) dazu ausgeführt ist, die benötigte Energiemenge zu berechnen und zumindest einen Auftrag an die ausgewählte Steuereinheit (5, 5") zu versenden ,
c. elektrische Energie entsprechend der Aufträge über mit einem Energieverteilungsnetz (3) verbundene elektrische Hausanschlüsse (6, 6', 6", 6‴) entgegenzunehmen
**dadurch gekennzeichnet, dass** die Steuereinheit (5', 5‴) ferner dazu ausgeführt ist eine Verteilreserve, das ist jene zusätzliche Energiemenge, die eine Anschlussstelle unter Berücksichtigung ihrer Energieangebote und ihrer Energiebilanz noch verteilen könnte, zu berücksichtigen.

14. Steuereinheit nach einem der Ansprüche 12 oder 13, **dadurch gekennzeichnet, dass** die Steuereinheit (5, 5', 5", 5"') als Computer oder Mikrocontroller umfassend eine Recheneinheit, eine Speichereinheit und eine vorzugsweise drahtlose Schnittstelleneinheit, ausgeführt ist.

## Claims

1. A method for distributing, via an energy distribution network (3), the electrical energy generated in a network of electrical connection points (1, 1', 1", 1‴) by energy production plants (2, 2', 2", 2"') associated with the connection points, the method comprising the following steps:
a. calculating, by local control units (5, 5', 5", 5"') connected to smart meters (4, 4', 4", 4‴), the energy balances of the connection points and sending the energy balances within the network,
b. calculating, by the control units (5, 5') of the connection points (1, 1") with positive energy balance, energy offers for the connection points (1', 1‴) with negative energy balance, taking into account an internal catalog of rules (9, 9'), and sending the calculated energy offers to the connection points (1', 1‴) with negative energy balance,
c. selecting, by the control units of the connection points (1', 1‴) with negative energy balance, energy offers based on an internal catalog of rules (9', 9"'), calculating the required amount of energy, and sending orders to the selected control units (5, 5") of the connection points (1, 1") with positive energy balance,
d. providing electrical energy according to the orders by the connection points (1, 1") with positive energy balance to the connection points (1', 1‴) with negative energy balance via electrical house connections (6, 6', 6", 6‴) connected to the energy distribution network (3),
**characterized in that** the control units (5, 5") of the connection points (1, 1") with positive energy balance calculate in step b) a distribution reserve, i.e. the additional amount of energy that they could still distribute taking into account their energy offers and their energy balance, and to send it to the connection points (1', 1‴) with negative energy balance together with the energy offers.

2. The method according to claim 1, **characterized in that** each connection point (1, 1', 1", 1‴) takes into account only a subset of the network, preferably one, two, three or four logically connected connection points (1, 1', 1", 1‴), when executing the method.

3. The method according to claim 2, **characterized in that** the subset of the network is stored on a central server unit in a list which can be queried by the control units (5, 5', 5", 5"') and is user-definable.

4. The method according to claim 3, **characterized in that** for each control unit (5, 5', 5", 5"') a number of control units selected according to geographical criteria, in particular spatially adjacent or separate control units, is defined in the list.

5. The method according to one of claims 1 to 4, **characterized in that** the control units of the connection points (1', 1‴) with negative energy balance take into account a distribution reserve transmitted to them when selecting the energy offers, calculating the required amount of energy and sending orders to the selected control units (5, 5") of the connection points (1, 1") with positive energy balance.

6. The method according to one of claims 1 to 5, **characterized in that** the control units (5', 5"') of the connection points (1', 1‴) with negative energy balance calculate in step c) a utilization reserve, i.e. the additional amount of energy that it would still additionally require taking into account its energy balance and the energy offers received, and to send it to the connection points (1, 1") with positive energy balance together with the selected orders.

7. The method according to claim 6, **characterized in that** the connection points (1, 1") with positive energy balance compare the commissioned amount of energy with their own energy balance when providing electrical energy in step d) and, in the event of a surplus, transmit additional energy in a second pass to those connection points (1', 1‴) which have transmitted a negative utilization reserve to them.

8. The method according to one of claims 1 to 7, **characterized in that** the control units (5, 5") of the connection points (1, 1") with positive energy balance feed surplus energy into the energy distribution network (3), and the control units (5', 5"') of the connection points (1', 1‴) with negative energy balance draw required energy from the energy distribution network (3).

9. The method according to one of claims 1 to 8, **characterized in that** the calculation of the energy balances in step a) and the provision of electrical energy in step d) takes place within a predefined time period of, for example, about 10 seconds.

10. A system comprising a network of electrical connection points (1, 1', 1", 1‴) with energy production plants (2, 2', 2", 2"') associated with the connection points and local control units (5, 5', 5", 5‴), wherein the local control units (5, 5', 5", 5‴) are provided at the connection points (1, 1', 1", 1‴) and are connected to smart meters (4, 4', 4", 4‴), wherein
a. the control units are configured to calculate the energy balances of the connection points and to send them within the network,
b. the control units (5, 5") of the connection points (1, 1") with positive energy balance are configured to calculate energy offers for the connection points (1', 1‴) with negative energy balance, the control units being configured to take account of an internal catalog of rules (9, 9"), and the control units (5, 5") of the connection points (1, 1") with positive energy balance being configured to send the calculated energy offers to the connection points (1', 1‴) with negative energy balance,
c. the control units (5', 5"') of the connection points (1', 1‴) with negative energy balance are configured to select energy offers on the basis of an internal catalog of rules (9', 9"'), to calculate the required amount of energy and to send orders to the selected control units (5, 5") of the connection points (1, 1") with positive energy balance,
d. the connection points (1, 1") with positive energy balance are configured to provide electric energy according to the selected orders to the connection points (1', 1‴) with negative energy balance via electric house connections (6, 6', 6", 6‴) connected to the energy distribution network (3),
**characterized in that** the control units (5, 5") of the connection points (1, 1") with positive energy balance are configured to calculate a distribution reserve, i.e. the additional amount of energy that they could still distribute taking into account their energy offers and their energy balance, and to send it to the connection points (1', 1‴) with negative energy balance together with the energy offers.

11. A computer-readable storage medium, comprising instructions for causing a system according to claim 10 with at least one control unit according to claim 12 or 13 to carry out a method according to one of claims 1 to 9.

12. A control unit (5, 5") comprising a computing unit, a storage unit and a communication unit connectable to a smart meter (4, 4") of an electrical connection point (1, 1") with associated energy production plants (2, 2"), wherein the control unit is configured to
a. calculate the energy balance of the connection point and to send it to at least one other control unit (5', 5‴),
b. calculate at least one energy offer for at least one other control unit (5', 5‴), wherein the control unit is configured to take into account an internal catalog of rules (9, 9"), and wherein the control unit (5, 5") is configured to send the energy offer to this other control unit (5', 5‴),
c. receive orders from at least one other control unit (5', 5‴), and provide electrical energy corresponding to the orders via electrical house connections (6, 6', 6", 6‴) connected to an energy distribution network (3),
**characterized in that** the control unit (5, 5") is further configured to calculate a distribution reserve, i.e. the additional amount of energy that a connection point could still distribute taking into account its energy offers and its energy balance, and to send it to the other control unit (5', 5"') together with the energy offers.

13. A control unit (5', 5"') comprising a computing unit, a storage unit and a communication unit connectable to a smart meter (4', 4‴) of an electrical connection point (1', 1‴) with associated energy production plants (2', 2‴), wherein the control unit is configured to
a. calculate the energy balance of the connection point and to send it to at least one other control unit (5, 5"),
b. select at least one energy offer from at least one other control unit (5, 5"), the control unit being configured to take into account an internal catalog of rules (9', 9"'), the control unit (5', 5"') being configured to calculate the amount of energy required and to send at least one order to the selected control unit (5, 5"),
c. receive electrical energy corresponding to the orders via electrical house connections (6, 6', 6", 6‴) connected to an energy distribution network (3),
**characterized in that** the control unit (5', 5‴) is further configured to consider a distribution reserve, i.e. the additional amount of energy that a connection point could still distribute taking into account its energy offers and its energy balance.

14. The control unit according to one of claims 12 or 13, **characterized in that** the control unit (5, 5', 5", 5"') is configured as a computer or micro-controller comprising a computing unit, a memory unit and a preferably wireless interface unit.

## Revendications

1. Un procédé de distribution de l'énergie électrique générée dans un réseau de points de raccordement électrique (1, 1', 1", 1‴) par des installations de production d'énergie (2, 2', 2", 2"') associées aux points de raccordement, par un réseau de distribution d'énergie (3), le procédé comprenant les étapes suivantes :
a. calculer, par des unités de commande (5, 5', 5", 5"') locales reliées à des compteurs intelligents (4, 4', 4", 4‴), les bilans énergétiques des points de raccordement et envoyer les bilans énergétiques en réseau,
b. calculer, par les unités de commande (5, 5') des points de raccordement (1, 1") présentant un bilan énergétique positif, des offres d'énergie pour les points de raccordement (1', 1‴) présentant un bilan énergétique négatif en tenant compte d'un catalogue de règles (9, 9') interne, et envoyer les offres d'énergie calculées aux points de raccordement (1', 1‴) présentant un bilan énergétique négatif,
c. sélectionner, par les unités de commande des points de raccordement (1', 1‴) présentant un bilan énergétique négatif, des offres d'énergie sur la base d'un catalogue de règles (9', 9‴) interne, calculer la quantité d'énergie nécessaire et envoyer des ordres aux unités de commande (5, 5") sélectionnées des points de raccordement (1, 1") présentant un bilan énergétique positif,
d. fournir de l'énergie électrique en fonction des ordres par les points de raccordement (1, 1") présentant un bilan énergétique positif à ces points de raccordement (1', 1‴) présentant un bilan énergétique négatif par l'intermédiaire de raccordements électriques domestiques (6, 6', 6", 6‴) reliés au réseau de distribution d'énergie (3),
**caractérisé en ce que** les unités de commande (5, 5") des points de raccordement (1, 1") présentant un bilan énergétique positif calculent à l'étape b) une réserve de distribution, c'est-à-dire la quantité d'énergie supplémentaire qu'ils pourraient encore distribuer en tenant compte de leurs offres d'énergie et de leur bilan énergétique, et l'envoient en même temps que les offres d'énergie aux points de raccordement (1', 1‴) présentant un bilan énergétique négatif.

2. Le procédé selon la revendication 1, **caractérisé en ce que** chaque point de raccordement (1, 1', 1", 1‴) ne tient compte, lors de la mise en œuvre du procédé, que d'un sous-ensemble du réseau, de préférence un, deux, trois ou quatre points de raccordement (1, 1', 1", 1‴) reliés logiquement.

3. Le procédé selon la revendication 2, **caractérisé en ce que** le sous-ensemble du réseau est stocké sur une unité centrale de serveur dans une liste interrogeable par les unités de commande (5, 5', 5", 5"') et définissable par l'utilisateur.

4. Le procédé selon la revendication 3, **caractérisé en ce que** dans la liste est défini pour chaque unité de commande (5, 5', 5", 5"') un nombre d'unités de commande sélectionnées selon des critères géographiques, en particulier des unités de commande voisines ou séparées dans l'espace.

5. Le procédé selon l'une des revendications 1 à 4, **caractérisé en ce que**, lors de la sélection des offres d'énergie, du calcul de la quantité d'énergie nécessaire et de l'envoi d'ordres aux unités de commande (5, 5") sélectionnées des points de raccordement (1, 1") présentant un bilan énergétique positif, les unités de commande des points de raccordement (1', 1‴) présentant un bilan énergétique négatif tiennent compte d'une réserve de distribution qui leur est transmise.

6. Le procédé selon l'une des revendications 1 à 5, **caractérisé en ce que** les unités de commande (5', 5"') des points de raccordement (1', 1‴) présentant un bilan énergétique négatif calculent à l'étape c) une réserve d'utilisation, c'est-à-dire la quantité d'énergie supplémentaire dont ils auraient encore besoin en tenant compte de leur bilan énergétique et des offres d'énergie reçues, et l'envoient en même temps que les ordres sélectionnés aux points de raccordement (1, 1") présentant un bilan énergétique positif.

7. Le procédé selon la revendication 6, **caractérisé en ce que** les points de raccordement (1, 1") présentant un bilan énergétique positif comparent, lors de la fourniture d'énergie électrique à l'étape d), la quantité d'énergie commandée avec leur propre bilan énergétique et, en cas d'excédent, transmettent dans un deuxième passage de l'énergie supplémentaire aux points de raccordement (1', 1‴) qui leur ont transmis une réserve d'utilisation négative.

8. Le procédé selon l'une des revendications 1 à 7, **caractérisé en ce que** les unités de commande (5, 5") des points de raccordement (1, 1") présentant un bilan énergétique positif injectent de l'énergie excédentaire dans le réseau de distribution d'énergie (3), et les unités de commande (5', 5"') des points de raccordement (1', 1‴) présentant un bilan énergétique négatif prélèvent l'énergie nécessaire sur le réseau de distribution d'énergie (3).

9. Le procédé selon l'une des revendications 1 à 8, **caractérisé en ce que** le calcul des bilans énergétiques à l'étape a) et la fourniture d'énergie électrique à l'étape d) sont effectués dans un délai prédéfini, par exemple d'environ 10 secondes.

10. Un système comprenant un réseau de points de raccordement électrique (1, 1', 1", 1‴) avec des installations de production d'énergie (2, 2', 2", 2"') associées aux points de raccordement et des unités de commande (5, 5', 5", 5"') locales, les unités de commande (5, 5', 5", 5"') locales étant prévues aux points de raccordement (1, 1', 1", 1‴) et étant reliées à des compteurs intelligents (4, 4', 4", 4‴), dans lequel
a. les unités de commande sont conçues pour calculer les bilans énergétiques des points de raccordement et pour les envoyer en réseau,
b. les unités de commande (5, 5") des points de raccordement (1, 1") présentant un bilan énergétique positif sont conçues pour calculer des offres d'énergie pour les points de raccordement (1', 1‴) présentant un bilan énergétique négatif, les unités de commande étant conçues pour tenir compte d'un catalogue de règles (9, 9") interne, et les unités de commande (5, 5") des points de raccordement (1, 1") présentant un bilan énergétique positif étant conçues pour envoyer les offres d'énergie calculées aux points de raccordement (1', 1‴) présentant un bilan énergétique négatif,
c. les unités de commande (5', 5"') des points de raccordement (1', 1‴) présentant un bilan énergétique négatif sont conçues pour sélectionner des offres d'énergie sur la base d'un catalogue de règles (9', 9‴) interne, pour calculer la quantité d'énergie nécessaire et pour envoyer des ordres aux unités de commande (5, 5") sélectionnées des points de raccordement (1, 1") présentant un bilan énergétique positif,
d. les points de raccordement (1, 1") présentant un bilan énergétique positif sont conçus pour fournir de l'énergie électrique en fonction des ordres sélectionnés à ces points de raccordement (1', 1‴) présentant un bilan énergétique négatif par l'intermédiaire de raccordements électriques domestiques (6, 6', 6", 6‴) reliées au réseau de distribution d'énergie (3),
**caractérisé en ce que** les unités de commande (5, 5") des points de raccordement (1, 1") présentant un bilan énergétique positif sont conçues pour calculer une réserve de distribution, c'est-à-dire la quantité d'énergie supplémentaire qu'ils pourraient encore distribuer en tenant compte de leurs offres d'énergie et de leur bilan énergétique, et pour l'envoyer en même temps que les offres d'énergie aux points de raccordement (1', 1‴) présentant un bilan énergétique négatif.

11. Un support de stockage lisible par ordinateur comprenant des instructions pour faire fonctionner un système selon la revendication 10 avec au moins une unité de commande selon la revendication 12 ou 13 pour mettre en œuvre un procédé selon l'une des revendications 1 à 9.

12. Une unité de commande (5, 5") comprenant une unité de calcul, une unité de mémoire et une unité de communication, pouvant être reliée à un compteur intelligent (4, 4") d'un point de raccordement électrique (1, 1") avec des installations de production d'énergie (2, 2") associées, l'unité de commande étant conçue pour
a. calculer le bilan énergétique du point de raccordement et de l'envoyer à au moins une autre unité de commande (5', 5‴),
b. calculer au moins une offre d'énergie pour au moins une autre unité de commande (5', 5‴), l'unité de commande étant conçue pour tenir compte d'un catalogue de règles (9, 9") interne, et l'unité de commande (5, 5") étant conçue pour envoyer l'offre d'énergie à cette autre unité de commande (5', 5‴),
c. recevoir des ordres d'au moins une autre unité de commande (5', 5"') et fournir de l'énergie électrique en fonction des ordres par l'intermédiaire de raccordements électriques domestiques (6, 6', 6", 6‴) reliés à un réseau de distribution d'énergie (3),
**caractérisée en ce que** l'unité de commande (5, 5") est en outre conçue pour calculer une réserve de distribution, c'est-à-dire la quantité d'énergie supplémentaire qu'un point de raccordement pourrait encore distribuer en tenant compte de ses offres d'énergie et de son bilan énergétique, et pour l'envoyer à l'autre unité de commande (5', 5‴) en même temps que les offres d'énergie.

13. Une unité de commande (5', 5‴) comprenant une unité de calcul, une unité de mémoire et une unité de communication, pouvant être reliée à un compteur intelligent (4', 4‴) d'un point de raccordement électrique (1', 1‴) avec des installations de production d'énergie (2', 2‴) associées, l'unité de commande étant conçue pour
a. calculer le bilan énergétique du point de raccordement et de l'envoyer à au moins une autre unité de commande (5, 5"),
b. sélectionner au moins une offre d'énergie d'au moins une autre unité de commande (5', 5‴), l'unité de commande étant conçue pour tenir compte d'un catalogue de règles (9', 9‴) interne, l'unité de commande (5', 5"') étant conçue pour calculer la quantité d'énergie nécessaire et pour envoyer au moins un ordre à l'unité de commande (5, 5") sélectionnée,
c. recevoir de l'énergie électrique en fonction des ordres par l'intermédiaire de raccordements électriques domestiques (6, 6', 6", 6‴) reliés à un réseau de distribution d'énergie (3),
**caractérisée en ce que** l'unité de commande (5', 5"') est en outre conçue pour calculer une réserve de distribution, c'est-à-dire la quantité d'énergie supplémentaire qu'un point de raccordement pourrait encore distribuer en tenant compte de ses offres d'énergie et de son bilan énergétique.

14. L'unité de commande selon l'une des revendications 12 ou 13, **caractérisée en ce que** l'unité de commande (5, 5', 5", 5"') est conçue comme ordinateur ou microcontrôleur comprenant une unité de calcul, une unité de mémoire et une unité d'interface de préférence sans fil.
